(19) **Europäisches Patentamt European Patent Office Office européen des brevets**

(11) **EP 2 812 721 B1**

(12) **EUROPEAN PATENT SPECIFICATION**

(45) Date of publication and mention of the grant of the patent:
**18.10.2017 Bulletin 2017/42**

(21) Application number: **13707485.2**

(22) Date of filing: **07.02.2013**

(51) Int Cl.:
*G01S 5/14* *(2006.01)*     *G01S 13/87* *(2006.01)*

(86) International application number:
**PCT/US2013/025231**

(87) International publication number:
**WO 2013/119878 (15.08.2013 Gazette 2013/33)**

(54) **INFERRED TIME-OF-FLIGHT RANGING**

GEFOLGERTE FLUGZEITMESSUNG

TÉLÉMÉTRIE PAR MESURE INFÉRÉE DU TEMPS DE VOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2012 US 201213371231**

(43) Date of publication of application:
**17.12.2014 Bulletin 2014/51**

(73) Proprietor: **Qualcomm Incorporated San Diego, CA 92121 (US)**

(72) Inventors:
• **MEADOR, James Chester** **San Diego, California 92121 (US)**
• **BURNS, David William** **San Diego, California 92121 (US)**

(74) Representative: **Tomkins & Co** **5 Dartmouth Road** **Dublin 6 (IE)**

(56) References cited:
**WO-A1-2011/113176**     **US-A- 5 144 312**
**US-A- 6 101 391**     **US-A1- 2010 177 681**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

Field

The present disclosure relates generally to wireless communications, and more specifically, to inferred time-of-flight ranging in wireless communications systems.

**Background**

Wireless communication networks are in the process of offering increasingly sophisticated capabilities associated with position location. New software applications, such as, for example, those related to personal productivity, collaborative communications, social networking, and data acquisition, may utilize position information to provide new features and services to consumers. Moreover, some regulatory requirements of various jurisdictions may require a network operator to report the location of a mobile apparatus when the mobile apparatus places a call to an emergency service, such as a 911 call in the United States.

Position determination has conventionally been provided using digital cellular positioning techniques. In conventional digital cellular networks, position location capability can be provided by various time and phase measurement techniques from points with a known location such as cellular base stations. For example, one position determination approach used in CDMA networks is referred to as Advanced Forward Link Trilateration (AFLT). Using AFLT, a mobile apparatus may compute its position from phase measurements of pilot signals transmitted from a plurality of base stations.

Improvements to AFLT have resulted from hybrid position location techniques, for example, where the mobile apparatus employs a Satellite Positioning System (SPS) receiver in addition to measurement techniques associated with the reception of base station signals. The SPS receiver provides position information independent of the information derived from the signals transmitted by the base stations. Position accuracy can be improved by combining measurements derived from both SPS and AFLT systems using conventional techniques.

However, conventional position location techniques based upon signals provided by SPS and cellular base stations may encounter difficulties when the mobile apparatus is operating within a building and within urban environments or in situations when high accuracy is desired. In such situations, signal reflection and refraction, multipath, signal attenuation, and the like can significantly reduce position accuracy, and can slow the "time-to-fix" to unacceptably long time periods. These issues may be overcome using signals from other existing wireless networks, such as, for example, Wi-Fi (e.g., Institute of Electrical and Electronic Engineers (IEEE) 802. 1 1x standards), to derive position information. Time-of-Flight (TOF) or Round-Trip-Time (RTT) measurements from a mobile apparatus to a number of fixed- site access points in short range radio or wireless communication networks, such as 802.11 or Wi-Fi networks can be used to determine the location of a mobile apparatus. Specifically, the mobile apparatus performs a ranging operation with each access point and then determines its location based on the information from the ranging operations. The mobile apparatus transmits a signal to each access point, which immediately responds by transmitting a signal back to the mobile apparatus. Assuming for the moment that the delay incurred by each signal as it propagates through an access point is negligible, the time it takes for each signal to travel from the mobile apparatus to an access point and back (RTT) can be measured, divided by two, and multiplied by the speed of light to arrive at the approximate distance to each access point from the mobile apparatus. Then, knowing the geographic position of each access point, the position of the mobile apparatus may be computed using techniques known in the art.

Generally, three-dimensional positioning requires ranging operations between the mobile apparatus and four or more non-planar, non-collinear fixed-site access points. Each such ranging operation requires time and power. Power consumption is a major concern for many mobile and battery-powered devices. Accordingly, it would be desirable to implement techniques to allow multiple access points to simultaneously measure the distance to a mobile apparatus in a more efficient manner.

United States Patent No. 6,101,391 relates to a mobile telephone system which sends a mobile's positional data to certain nearby mobiles.

**SUMMARY**

The present invention relates to a method by an apparatus for distance determination and an apparatus for distance determination, as defined in the appended claims. In one aspect of the disclosure, an apparatus for distance determination includes a processing system configured to detect at the apparatus a range request transmitted between a second apparatus and a third apparatus, wherein the third apparatus is geographically fixed and wherein the second apparatus is movable, detect at the apparatus a range response transmitted between the second apparatus and the third apparatus in response to the range request, and determine a distance between the apparatus and the second apparatus based on the detected range request and detected range response.

In another aspect of the disclosure, a method by an apparatus for distance determination includes detecting at the apparatus a range request transmitted between a second apparatus and a third apparatus, wherein the third apparatus is geographically fixed and wherein the second apparatus is movable, detecting at the apparatus a range response transmitted between the second apparatus and the third apparatus in response to the range request, and determining by the apparatus a distance between the apparatus and the second apparatus based on the detected range request and the detected range response.

In yet another aspect of the disclosure, an apparatus for distance determination includes means for detecting at an apparatus a range request transmitted between a second apparatus and a third apparatus, wherein the third apparatus is geographically fixed and wherein the second apparatus is movable, means for detecting at the apparatus a range response transmitted between the second apparatus and the third apparatus in response to the range request, and means for determining a distance between the apparatus and the second apparatus based on the detected range request and the detected range response.

In a further aspect of the disclosure, a computer-program product for distance determination includes computer-readable medium comprising code executable to detect at an apparatus a range request transmitted between a second apparatus and a third apparatus, wherein the third apparatus is geographically fixed and wherein the second apparatus is movable, detect at the apparatus a range response transmitted between the second apparatus and the third apparatus in response to the range request, and determine the distance between the apparatus and the second apparatus based on the detected range request and the detected range response.

In yet another aspect of the disclosure, a wireless access point includes a processing system configured to provide access to a network for a second apparatus that is movable, detect a range request transmitted between a third apparatus and the second apparatus, wherein the third apparatus is geographically fixed and wherein the second apparatus is movable, detect a range response transmitted between the second apparatus and the third apparatus in response to the range request, and determine the distance to the second apparatus based on the detected range request and range response at the wireless access point.

In yet a further aspect of the disclosure, a wireless controller includes a processing system configured to control equipment in a building automation system, detect a range request transmitted between a second apparatus and a third apparatus, wherein the second apparatus is moveable and the third apparatus is geographically fixed, detect a range response transmitted between the second apparatus and the third apparatus in response to the range request, and determine the distance to the second apparatus based on the detected range request and range response at the wireless controller.

It is understood that other aspects of apparatuses, methods, and articles of manufacture will become readily apparent to those skilled in the art from the following detailed description, wherein various aspects of apparatuses, methods and articles of manufacture are shown and described by way of illustration. As will be realized, these aspects may be implemented in other and different forms and its several details are capable of modification in various other respects. Accordingly, the drawings and detailed description are to be regarded as illustrative in nature and not as restrictive.

**BRIEF DESCRIPTION OF THE DRAWINGS**

FIG. 1 is a simplified diagram illustrating an example of an operating environment for a mobile apparatus;

FIG. 2 is a simplified diagram illustrating another example of an operating environment for a mobile apparatus;

FIG. 3A is a simplified diagram illustrating an example of network geometries to describe the timing information that is collected and processed for an inferred time-of-flight ranging operation;

FIG. 3B is a timing diagram for the example of FIG. 3A to visualize the inferred time-of-flight ranging operation;

FIG. 4A is a simplified diagram illustrating an example of a two-dimensional process to determine the location of a mobile apparatus from inferred distances with two fixed-site apparatuses;

FIG. 4B is a simplified diagram illustrating an example of a two-dimensional process to determine the location of a mobile apparatus from inferred distances with three fixed-site apparatuses;

FIG. 5 is a flow chart illustrating an example of a method of inferred time-of-flight ranging by a fixed-site apparatus;

FIG. 6 is a flow chart illustrating an example for determining the distance from a fixed-site apparatus to a mobile apparatus;

FIG. 7 is a conceptual data flow diagram illustrating an example of data flow between different modules in an apparatus; and

FIG. 8 is a block diagram illustrating an example of several elements that comprise one configuration of a fixed-site apparatus capable of inferred time-of-flight ranging.

## DETAILED DESCRIPTION

Various aspects of the disclosure will be described more fully hereinafter with reference to the accompanying drawings. This disclosure may, however, be embodied in many different forms by those skilled in the art and should not be construed as limited to any specific structure or function presented herein. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of this disclosure, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of this disclosure. It should be understood that any aspect of the disclosure disclosed herein may be embodied by one or more elements of a claim.

Although particular aspects will be described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description. The detailed description and drawings are merely illustrative of the disclosure rather than limiting, the scope of the disclosure being defined by the appended claims and equivalents thereof.

Several concepts directed to various inferred time-of-flight ranging operations will now be presented. As described earlier in the background section of this disclosure, ranging operations may be performed in a communications system to determine the position of a mobile apparatus. By way of example, the mobile apparatus may transmit a signal to a plurality of fixed-site apparatuses, each of which respond by transmitting a signal back to the mobile apparatus. The mobile apparatus may then determine the distance to each fixed-site apparatus using RTT measurements, or some other suitable technique. The position of the mobile apparatus then may be computed (e.g., by the mobile apparatus) from the geographic coordinates for each fixed-site apparatus and the distances from the mobile apparatus thereto.

Alternatively, a technique referred to herein as "inferred time-of-flight ranging" may be used in a communications system to determine distances from the mobile apparatus to each fixed-site apparatus. With this technique, one of the fixed-site apparatuses ("the ranging apparatus") transmits a range request to the mobile apparatus. One or more fixed-site apparatuses ("the inferring apparatuses") detect the range request and note the time of arrival of the range request. The mobile apparatus then sends a range response back to the ranging apparatus in response to receiving the range request. The inferring apparatuses may detect the range response and note the time of arrival of the range response. The ranging apparatus then uses RTT measurements, or some other suitable technique, to determine the distance from the ranging apparatus to the mobile apparatus and provides to the inferring apparatuses the distance (or time) and the turnaround delay between the receipt of the range request and the transmitting of the range response (unless the delay time is fixed and previously supplied to the inferring apparatuses). Assuming that each of the inferring apparatuses has knowledge of its distance to the ranging apparatus, each can determine its distance to the mobile apparatus in a manner to be described in greater detail below. The distance (or time-of-flight) between each inferring apparatus and the ranging apparatus may be known, *a priori*, by each inferring apparatus, or may be transmitted from the ranging apparatus to the inferring apparatuses before, during, or after the ranging operation.

Inferred time-of-flight ranging techniques may provide several advantages. For example, the mobile apparatus does not need to perform a ranging operation with each of a plurality of multiple fixed-site apparatuses. Instead, the mobile apparatus performs a single ranging operation with one single fixed-site apparatus. This results in power savings at the mobile apparatus, which is highly desirable for a battery powered mobile apparatus. In addition, each fixed-site apparatus can compute its distance to the mobile apparatus simultaneously without having to communicate directly with the mobile apparatus, thereby reducing the time required to complete the ranging process. Preferably, the inferred ranging process is configured to push more of the processing burden onto the fixed-site apparatuses, which are typically less power constrained than the mobile apparatus.

The location of the mobile apparatus may then be computed from the coordinates of each fixed-site apparatus and its distance to the mobile apparatus using trilateration or some other suitable technique. The location of the mobile apparatus may be computed in two-dimensional or three-dimensional space using Cartesian coordinates or horizontal coordinates (e.g., azimuth and elevation) with reference to some fixed entity or, in some configurations, longitudinal and latitudinal coordinates.

The term "fixed-site" apparatus as used throughout this disclosure, or an apparatus described as being "geographically fixed," does not mean that the apparatus is permanently fixed to a specific location. Rather, these references are used to indicate that the apparatus is geographically fixed for the time period required to perform a ranging operation. By way of example, a fixed-site apparatus may be geographically fixed during a ranging operation with a mobile apparatus and later moved to a new site for whatever purpose.

Various applications for inferred time-of-flight ranging will now be presented for the purpose of providing a more thorough understanding of this concept. However, as those skilled in the art will readily appreciate, these applications may be modified in practical applications. Moreover, other applications for inferred time-of-flight ranging will be readily apparent to those skilled in the art from the teachings throughout this disclosure. The various applications that will now be presented should therefore be considered as exemplary only with the understanding that the full scope of the concepts taught throughout this disclosure have a vast range of applications.

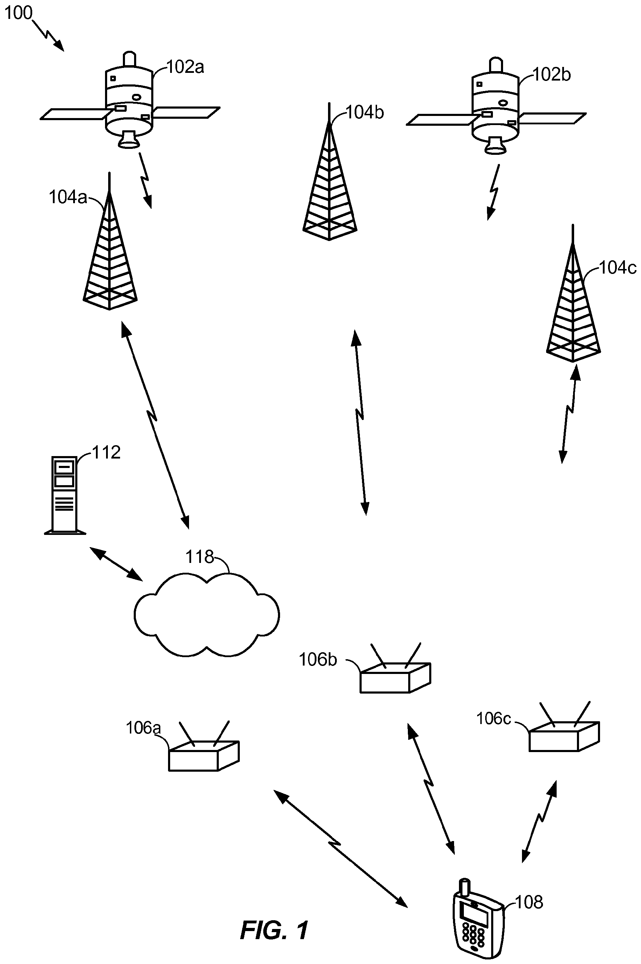

FIG. 1 is a diagram illustrating an example of an operating environment 100 for a mobile apparatus 108. Examples of a mobile apparatus 108 include, but are not limited to, a radio, a cellular phone, a smart phone, a session initiation protocol (SIP) phone, a laptop, a personal digital assistant (PDA), a personal communication system (PCS) device, a personal information manager (PIM), personal navigation device (PND), a global positioning system, a multimedia device, a video device, an audio device, an employee badge, an equipment asset tag, a wireless sensor, any combination thereof, or any other suitable mobile apparatus which, for example, may be capable of receiving wireless communication and/or navigation signals. The mobile apparatus 108 may also be referred to by those skilled in the art as a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, user equipment (UE), or some other suitable terminology.

The operating environment 100 may contain one or more different types of wireless communication systems and wireless positioning systems. In the example shown in FIG. 1, a Satellite Positioning System (SPS) 102 may be used as an independent source of position information for the mobile apparatus 108. The mobile apparatus 108 may include one or more dedicated SPS receivers specifically designed to receive signals for deriving location information from the SPS satellites (102a, 102b, etc.).

The operating environment 100 may also include one or more types of Wide Area Network Wireless Access Points (WAN-WAPs) 104, which may be used for wireless voice and data communication, and as another source of independent position information for the mobile apparatus 108. Typically, each of the WAN-WAPs 104a-104c may operate from fixed positions, and provide network coverage over large metropolitan and regional areas. The WAN-WAPs 104 may be part of a wireless wide area network (WWAN), which may include cellular base stations at known locations, and other wide area wireless systems, such as, for example, WiMAX nodes as specified under IEEE 802.16. A WAN-WAP 104 may also be referred to as a base station, a base transceiver station, a radio base station, a radio transceiver, a transceiver function, a basic service set (BSS), an extended service set (ESS), an eNode-B, or some other suitable terminology. It will be appreciated that the WWAN may include other known network components, which, for simplicity, are not shown in FIG. 1.

The operating environment 100 may further include Local Area Network Wireless Access Points (LAN-WAPs) 106, which may be used for wireless voice and data communication, and as another independent source of position data. The LAN-WAPs 106 can be part of a Wireless Local Area Network (WLAN), which may operate in buildings and perform communications over smaller geographic regions than a WWAN. Such LAN-WAPs 106 may be part of, for example, Wi-Fi networks, cellular piconets and femtocells, Bluetooth, IEEE 802.15x, and the like. The LAN-WAPs 106 may provide access points from the mobile apparatus 108 to the WLAN.

The mobile apparatus 108 may derive position information from any one or a combination of the SPS satellites 102, the WAN-WAPs 104, and the LAN-WAPs 106. Each of the aforementioned systems can provide an independent estimate of the position for the mobile apparatus 108 using different techniques. In some configurations, the mobile apparatus 108 may combine the solutions derived from each of the different types of access points to improve the accuracy of the position data. However, for increased accuracy, particularly within an indoor location where satellite signals may be difficult to receive, reliance on localized techniques based on signal sources closer in proximity to the mobile apparatus 108 generally results in the potential for greater accuracy.

When deriving the position of the mobile apparatus 108 using the WLAN, inferred time-of-flight ranging techniques may be used with the assistance of a network 118 and a server 112. The LAN-WAPs 106 may communicate with the server 112 through the network 118. The network 118 may be the Internet, or some other suitable network capable of supporting communications between the LAN-WAPs 106 and the server 112. In this configuration, a LAN-WAP, for example LAN-WAP 106a, may transmit a range request to the mobile apparatus 108. In response, the mobile apparatus 108 sends a range response to the LAN-WAP 106a. The LAN-WAPs 106b-106c that can hear or otherwise detect the range request and range response, note the arrival times of the range request and range response at the LAN-WAPs 106. Assuming each of LAN-WAPs 106b-106c knows its distance (or time-of-flight) to the LAN-WAP 106a, each can determine the distance to the mobile apparatus 108 when it receives from the LAN-WAP 106a the distance between the LAN-WAP 106a and the mobile apparatus 108. The distance to the mobile apparatus 108 determined by each LAN-WAP 106 may then be transmitted, along with its geographic coordinates, to the server 112 through the network 118. The server 112 may then determine the location of the mobile apparatus 108 by means known in the art.

In this example, the server 112 is shown as a separate entity within the network 118. However, the server 112 may reside anywhere in the operating environment 100. By way of example, the server 112 could be a dedicated server in the WLAN or integrated into one of the LAN-WAPs 106 or the mobile apparatus 108. Alternatively, the server 112 may be distributed across multiple servers and/or one or more other entities in the operating environment 100. Preferably, the server is a single entity or distributed across multiple entities that are not battery powered. The particular design of the server 112 will depend on a variety of factors including the particular application and the overall design constraints imposed on the system.

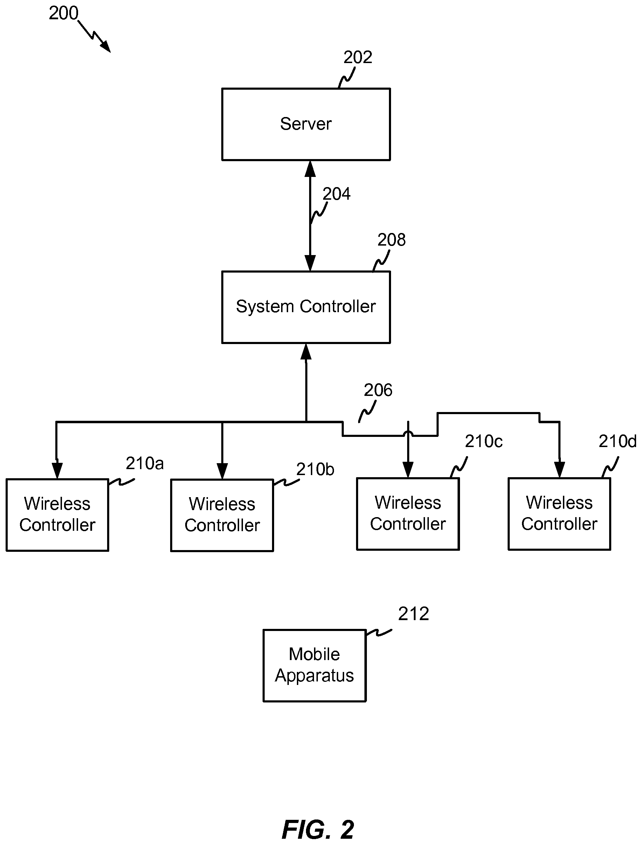

FIG. 2 is a simplified diagram illustrating another example of an operating environment for a mobile apparatus. In this example, the operating environment is a building automation system. The building automation system 200 serves primarily as an intelligent network designed to control, monitor, and optimize building equipment including, by way of example, lighting, temperature, security, entertainment, climate, and other building equipment.

The building automation system 200 is shown with several components connected together with a primary bus 204 and secondary bus 206 which is meant to represent that these components are operatively coupled together. Those skilled in the art will recognize that other components may be provided and adapted as necessary to operatively couple and configure an actual building automation system. Further, it is also recognized that one or more components illustrated in FIG. 2 may be further subdivided or that two or more components in FIG. 2 may be combined.

A server 202 coordinates the activities of the various components on the primary and secondary busses. The server 202 may provide security, redundancy, alarms, notifications, data computations required by the system controller 208, and/or other required functions. The server 202 may also include a user interface (not shown) or support a user interface on the primary bus 204. The user interface provides a user with access to the building automation system 200. By way of example, the user interface may be used to operate the lights automatically at certain times, maintain a set temperature in the building, limit access to secured premises in the building, and the like. The user interface may include a keypad, display, speaker, microphone, joystick, and/or any other combination of user interface devices. As will be described in greater detail later, the server 202 may also be used to support the tracking of a mobile apparatus 212 in the building.

Each wireless controller 210 provides an interface to building equipment. By way of example, the wireless controller 210a may interface with the lighting system, the wireless controller 210b may interface with the air conditioning, the wireless controller 210c may interface with the heater, the wireless controller 210d may interface with an entertainment system, and so on. Each wireless controller 210 includes a wireless transceiver to provide a wireless interface to the building equipment. The transceiver (not shown) may support any suitable wireless standard including, by way of example, ZigBee. ZigBee is a specification for a suite of high level communication protocols using small, low-power digital radios based on IEEE 802 standards for personal area networks (PAN). Alternatively, the transceivers could support IEEE 802.11x, Bluetooth, or any other suitable wireless standard. The wireless controllers 210 may also include a sensor (not shown). By way of example, the wireless controller 210c for the heater may contain a sensor to determine the temperature. Alternatively, the temperature sensor may be located remotely from the wireless controller 210c and transmitted to the transceiver.

The system controller 208 is configured to read the sensor measurements from each of the wireless controllers 210 and compare them with the settings provided by the server 202. Based on this comparison, the system controller 208 sends commands to the wireless controllers 210 to adjust the building equipment. By way of example, if the temperature sensor reading from the wireless controller 210c is below the setting provided by the server 202, the system controller 208 may send a command to the wireless controller 210c to increase the temperature of the heater.

In this example, the wireless controllers 210 may be used to track a mobile apparatus 212 within the building. The mobile apparatus 212 may be a telecommunications device as described in connection with FIG. 1. Alternatively, the mobile apparatus 212 may be equipment, or embedded in equipment, which is moveable within the building. By way of example, the mobile apparatus 212 may be a portable ultrasound machine, a wheelchair, a patient monitor, an EKG machine, or other equipment in a hospital building. The mobile apparatus 212 can be basically any apparatus that is moveable such as, by way of example and without limitation, a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a security badge, an asset tag, equipment, machines, personal belongings, or any other mobile device.

In this example, inferred time-of-flight ranging techniques may be employed by the wireless controllers 210 to locate the mobile apparatus 212 within the building. Similar to the techniques described above in connection with the wireless communication system of FIG. 1, a wireless controller 210, for example wireless controller 210a, may transmit a range request to the mobile apparatus 212. In response, the mobile apparatus 212 may send a range response to the wireless controller 210a. The wireless controllers 210b-210d that can hear or detect the range request and range response note the arrival times of the range request and range response. Assuming each wireless controller 210b-210d knows its distance to the wireless controller 210a, each can determine the distance to the mobile apparatus 212 when it receives from the wireless controller 210a the distance (or time-of-flight) between the wireless controller 210a and the mobile apparatus 212. The distance to the mobile apparatus 212 determined by each wireless controller 210 may then be transmitted, along with its geographic coordinates, to the server 202. The server 202 may then determine the location of the mobile apparatus 212.

In the described example, the server 202 with information received from one or more wireless controllers 210 may be used to determine the location of the mobile apparatus 212. Alternatively, any of the wireless controller 210 may be used to determine the location. By way of example, the wireless controller 210a that initiates the ranging operation by transmitting the range request to the mobile apparatus 212 may provide this functionality. In this example, each of the other wireless controllers 210b-210d determine its distance to the mobile apparatus 212 and provides that information to the wireless controller 210a. Then, knowing the geographic position of each wireless controller 210, the wireless controller 210a can determine the location of the mobile apparatus 212. Alternatively, the functionality may be distributed across the server 202 and multiple wireless controllers 210 or any other entity in the building automation system 200.

In the examples presented thus far, the inferred time-of-flight ranging function was a secondary feature for a plurality of fixed-site apparatuses. In the first example presented above, the inferred time-of-flight ranging function is performed by LAN-WAPs in a wireless communications system. Each of these LAN-WAPs primarily serve as an access point for a mobile apparatus to a WLAN or other network. The inferred time-of-flight ranging function is integrated into these LAN-WAPs in the first example. In the second example that followed, the inferred time-of-flight ranging function is performed by a plurality of wireless controllers in a building automation system. Each of these wireless controllers primarily serve to monitor and control building equipment (e.g., lighting, temperature, climate, etc.) with the inferred time-of-flight ranging function integrated into these devices. As those skilled will readily appreciate, the inferred time-of-flight ranging feature may be integrated into other devices (e.g., WAN-WAPs 104), including devices operating in different environments.

Alternatively, the inferred time-of-flight ranging function may be implemented with a plurality of dedicated fixed-site apparatuses mounted in a building or another area. In this example, the fixed-site apparatuses would provide no other function than ranging. One fixed-site apparatus can be a dedicated ranging apparatus which sends a range request to the mobile apparatus to initiate the process of locating the mobile apparatus. The other fixed-site apparatuses determine their distance to the mobile apparatus in the manner described herein. In another configuration, each fixed-site apparatus may be capable of being the ranging apparatus. The ranging apparatus for each ranging operation may be selected by a predetermined algorithm or in some other manner. In any event, once the distances to the mobile apparatus are computed by each of the fixed-site apparatuses, the location of the mobile apparatus may be determined by a fixed-site apparatus, multiple fixed-site apparatuses, another entity, or combination thereof.

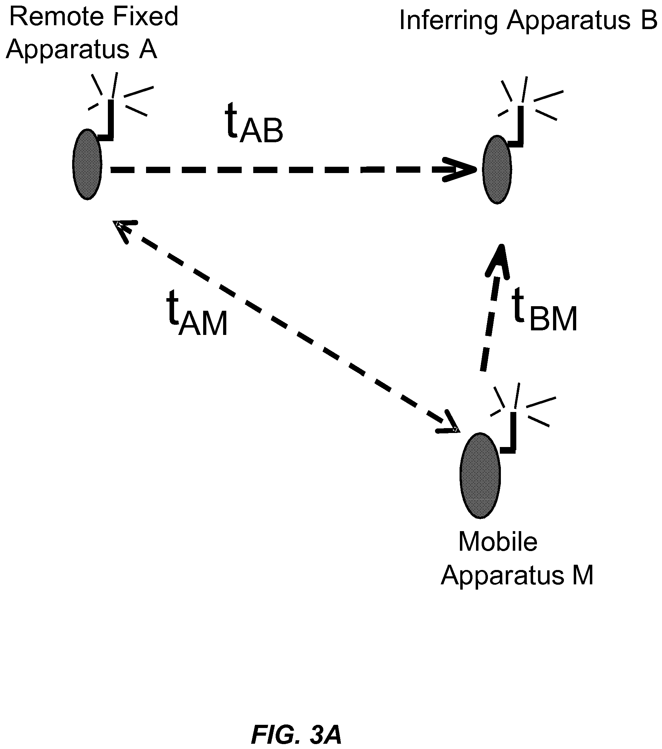

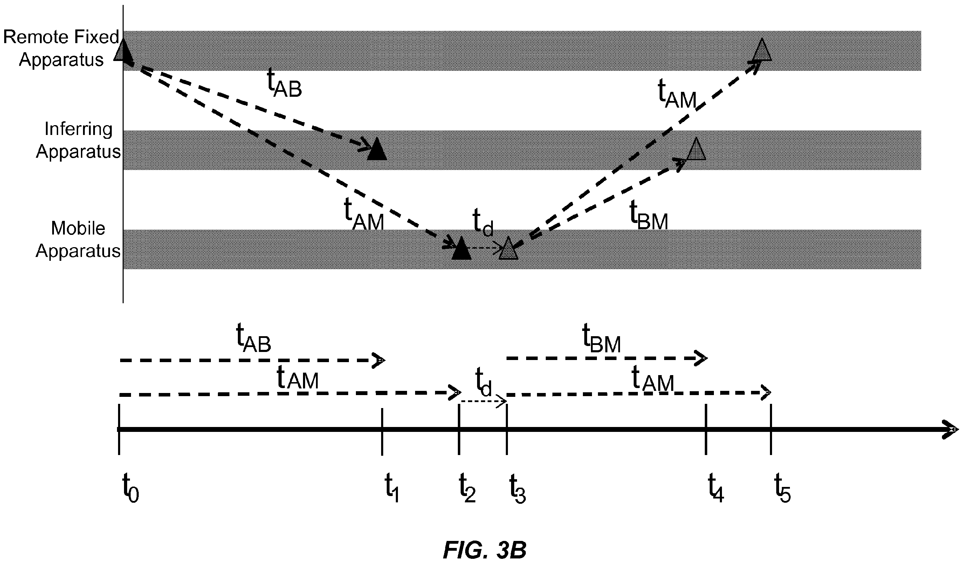

An example of an inferred time-of-flight ranging operation will now be presented with reference to FIGS. 3A and 3B. FIG. 3A is a diagram illustrating an example of network geometries to describe the timing information that is collected and processed for the inferred time-of-flight ranging operation. FIG. 3B is a timing diagram for the example of FIG. 3A to visualize the inferred time-of-flight ranging operation. Referring to FIG. 3A, the ranging apparatus node is represented by "remote fixed apparatus A," the inferring apparatus is represented by "inferring apparatus B," and the mobile apparatus is represented by "mobile apparatus M." In this example, the signal propagation time between the remote fixed apparatus A and mobile apparatus M is represented by $t_{AM}$, the signal propagation time between remote fixed apparatus A and inferring apparatus B is represented by $t_{AM}$, and the signal propagation time between inferring apparatus B and mobile apparatus M is represented by $t_{BM}$.

Referring to FIGS. 3A and 3B, the remote fixed apparatus A transmits a range request to mobile apparatus M at to. The range request arrives at the inferring apparatus B at $t_0 + t_{AB}$, which is represented in FIG. 3B by $t_1$. The inferring apparatus B records the arrival time of the range request. The range request arrives at the mobile apparatus M at to + $t_{AM}$, which is represented by $t_2$. The mobile apparatus M processes the range request and then transmits a range response to the remote fixed apparatus A. The range response is transmitted by the mobile apparatus M after a short processing delay $t_d$ (i.e., the delay between the receipt of the range request by the mobile apparatus M and the transmission of the range response by the mobile apparatus M). The range response is transmitted at $t_2 + t_d$, which is represented by $t_3$. The processing delay $t_d$ is either (i) known by the remote fixed apparatus A and the inferring apparatus B, *a priori;* or (ii) communicated to both remote fixed apparatus A and inferring apparatus B by the mobile apparatus M; or (iii) communicated to the remote fixed apparatus A, which then communicates $t_d$ to the inferring apparatus B. The range response arrives at the inferring apparatus B at $t_3 + t_{BM}$, which is represented by $t_4$. The inferring apparatus B records the arrival time of the range response. The range response is received by the remote fixed apparatus A at $t_3 + t_{AM}$, which is represented by $t_5$.

The remote fixed apparatus A may now compute the signal propagation time $t_{AM}$ to the mobile apparatus M as follows:

$$t_5 - t_0 = (t_{AM} + t_d + t_{AM});$$

which can be rewritten as follows:

$$t_{AM} = ((t_5 - t_0) - t_d)/2.$$

Once the remote fixed apparatus A computes the signal propagation time $t_{AM}$, it can then compute the distance $d_{AM}$ to the mobile apparatus M as follows:

$$d_{AM} = t_{AM} \times c \text{ (speed of light)}.$$

The remote fixed apparatus A communicates the signal propagation time $t_{AM}$ to the inferring apparatus B. The inferring apparatus B may then compute the distance to the mobile apparatus M by first computing $t_{BM}$ as follows:

$$t_4 - t_0 = t_4 - (t_1 - t_{AB}) = (t_{AM} + t_d + t_{BM});$$

which can be rewritten as follows:

$$t_{BM} = (t_4 - t_1) + t_{AB} - t_d - t_{AM} \quad \text{(equation 1)}.$$

The signal propagation time $t_{AB}$ between the remote fixed apparatus A and the inferring apparatus B is a constant when the distance between the two apparatuses is fixed. Accordingly, the signal propagation time $t_{AB}$ may be known, *a priori,* by the inferring apparatus B, or communicated to it, by way of example, through an SPS system as described above in connection with FIG. 1, or by some other suitable means. It may be noted that while the timing diagrams in FIG. 3B indicate that time $t_1$ precedes $t_2$ and that time $t_4$ precedes $t_5$, the relative distances between the mobile apparatus M and the fixed apparatuses may result in situations where time $t_1$ occurs simultaneously or after $t_2$ and where time $t_4$ occurs simultaneously or after $t_5$, without loss of generality.

Alternatively, remote fixed apparatus A may communicate $t_{AM}$, $t_d$, and $t_0$ to inferring apparatus B and inferring apparatus B may use the following equation to determine $t_{BM}$:

$$t_{BM} = t_4 - t_0 - t_d - t_{AM} \quad .$$

Once the inferring apparatus B computes the signal propagation time $t_{BM}$, it can then compute the distance $d_{BM}$ to the mobile apparatus M as follows:

$$d_{BM} = t_{BM} \times c \text{ (speed of light)} \quad \text{(equation 2)}.$$

Although the example in FIGS. 3A and 3B depict a time-of-flight ranging operation which initiates at remote fixed apparatus A with a response from mobile apparatus M, it can be appreciated that a similar, symmetric operation is also possible. An analogous time-of-flight ranging operation might initiate at mobile apparatus M, with a response from remote fixed apparatus A. By way of one or more exchanges between remote fixed apparatus A and mobile apparatus M, the time-of-flight or distance between them can be determined, and this information can be conveyed from mobile apparatus B to remote fixed apparatus A. The information may be detected directly by or sent to inferring apparatus B from fixed remote apparatus A.

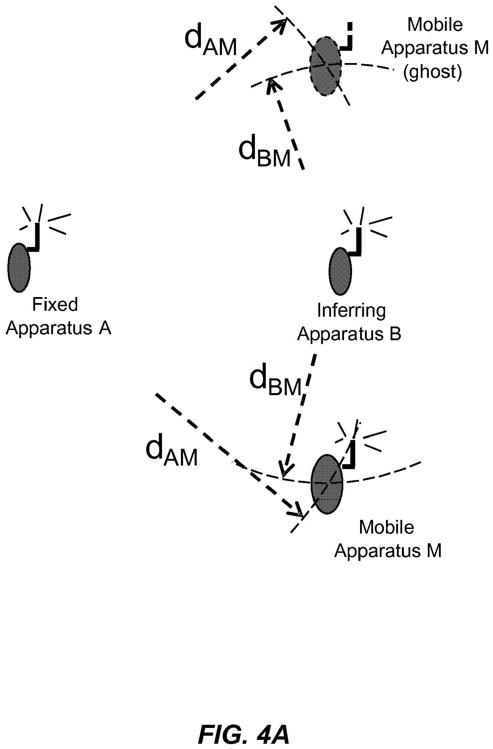

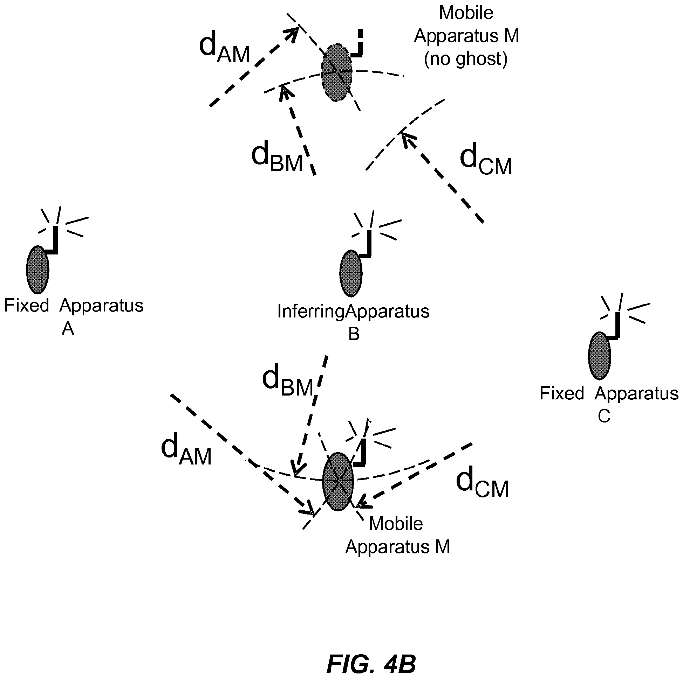

The location of the mobile apparatus M may now be computed. An example will now be presented with reference to FIGS. 4A and 4B. FIG. 4A is a simplified diagram illustrating an example of a two-dimensional process to determine the location of the mobile apparatus M from inferred distances with two fixed-site apparatuses. FIG. 4B is a simplified diagram illustrating an example of a two-dimensional process to determine the location of a mobile apparatus M from inferred distances with three fixed-site apparatuses.

In two-dimensional geometry, when it is known that a point lies on the boundaries of two curves, then the centers of the two circles and the radii provide sufficient information to narrow the possible locations down to two. Referring to FIG. 4A, one can readily see that the mobile apparatus M lies at the intersection of two circles. The first circle is centered on the fixed apparatus A with a radius of $d_{AM}$ and the second circle is centered on the inferring apparatus B with a radius of $d_{BM}$. In this example, the circles intersect at two points: the actual location of the mobile apparatus M and a ghost location.

The ghost location may be removed by introducing a third fixed apparatus, "inferring apparatus C" that is not collinear with fixed apparatus A and inferring apparatus B, as illustrated in FIG. 4B. In FIG. 4B, a third circle is added. The third circle is centered on the inferring apparatus C and has a radius equal to $d_{CM}$ (i.e., the distance between the inferring apparatus C and the mobile apparatus M). The distance $d_{CM}$ may be determined through inferred ranging in the manner described above for inferring apparatus B in connection with FIGS. 3A and 3B. From FIG. 4B, one can see that the mobile apparatus M is located at the intersection of the three circles, and the ghost location can be discounted.

An additional fixed-site apparatus is required for three-dimensional geometry. A sphere can be drawn for each of the fixed apparatus A, fixed apparatus B, and fixed apparatus C from their three-dimensional coordinates (not shown). The sphere for each fixed apparatus is drawn with a radius equal to the distance between each fixed apparatus A, B, and C, respectively, and the mobile apparatus M. In this example, the mobile apparatus lies at one of two intersection points between the surfaces of the three spheres. The two intersection points represent the actual location of the mobile apparatus M and a ghost location. The actual location of the mobile apparatus can be determined by introducing a fourth sphere based on the coordinates of a fourth fixed apparatus and its distance to the mobile apparatus M. The mobile apparatus M will lie at the one intersection point of the surfaces of the four spheres.

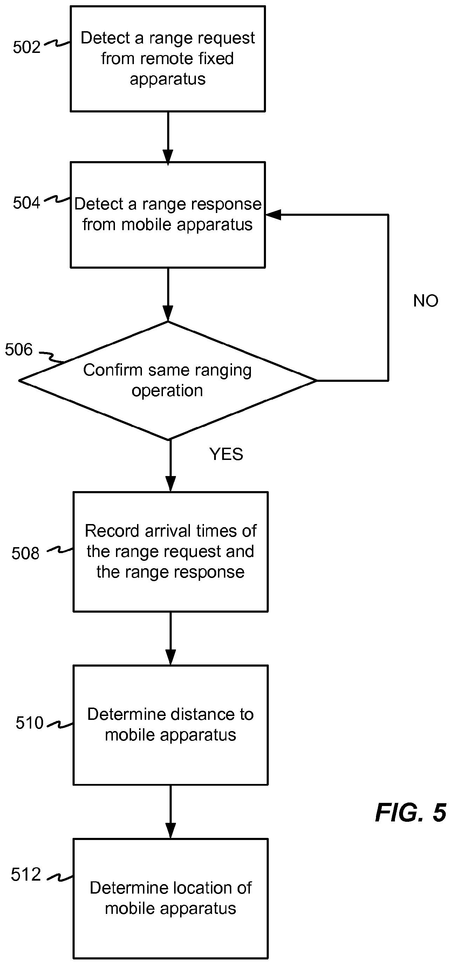

FIG. 5 is a flow chart illustrating an example of a method of inferred time-of-flight ranging by a fixed-site apparatus (e.g., inferring apparatus B). In this example, the inferring apparatus (herein "apparatus") employs a method for determining the distance to a mobile apparatus (e.g., mobile apparatus M) without having to communicate directly with the mobile apparatus. Initially, the apparatus enters into a listen or detect mode and searches for a ranging operation between the mobile apparatus and a fixed-site remote apparatus (e.g., remote fixed apparatus A). Referring to FIG. 5, the apparatus detects a range request transmitted from the remote fixed-site apparatus to the mobile apparatus in step 502. The range request may be addressed to the mobile apparatus, and therefore, the apparatus does not transmit a range response. Instead, the apparatus listens for a range response from the mobile apparatus. In step 504, the apparatus detects the range response transmitted from the mobile apparatus to the remote fixed-site apparatus in response to the range request. In step 506, the apparatus may determine whether the range response was transmitted in response to the range request. This may be achieved in any number of ways. By way of example, the range request and range response may be data packets that contain a matching electronic tag or electronic identification number in their data fields. The apparatus can recover the electronic tags or identification numbers from the data packets and compare the two to determine whether they are part of the same ranging operation. If not, the apparatus returns to step 504 and continues to listen for a range response. Otherwise, the apparatus declares a match and records the arrival times of the range request and range response in step 508.

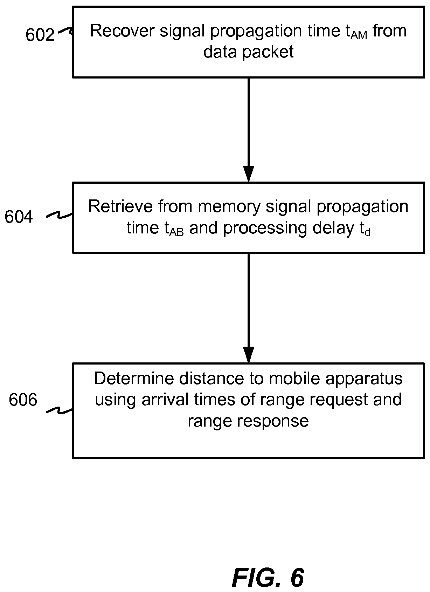

The arrival times of the range request and range response may be used by the apparatus to determine the distance to the mobile apparatus in step 510. An example will now be presented with reference to FIG. 6. FIG. 6 is a flow chart illustrating an example for determining the distance to the mobile apparatus. In this example, the signal propagation time $t_{AM}$ between the remote fixed-site and mobile apparatuses is sent to the inferring apparatus in a data packet or by some other suitable means. The apparatus recovers the signal propagation time $t_{AM}$ from the data packet in step 602. In step 604, the apparatus may retrieve from an internal or an external memory the signal propagation time $t_{AB}$ between the remote fixed-site apparatus and the inferring apparatus. Alternatively, the apparatus may retrieve from internal or external memory the distance between the remote fixed-site apparatus and the inferring apparatus or alternatively the locations of the fixed-site and inferring apparatuses from which the distance between the fixed-site and inferring apparatuses can be determined. This information may be used by the inferring apparatus to compute $t_{AB}$ by dividing the distance by the speed of light. The apparatus may also retrieve from memory the processing delay $t_d$ for cases where processing delay $t_d$ is known and has been stored These values may be constants, and therefore, stored in some form of computer-readable media (e.g., memory). Alternatively, one or more of the values $t_{AM}$, $t_d$, and $t_{AM}$ may be communicated to the apparatus or computed by the apparatus. As an example of the latter, if the apparatus knows when $t_0$ occurs, through a synchronization process with the remote fixed-site apparatus, the apparatus can compute the signal propagation time $t_{AB}$ based on the arrival time of the range request. The processing delay $t_d$ could be communicated to the apparatus by the mobile apparatus directly or indirectly through the remote fixed-site apparatus. In any event, the apparatus determines the distance to the mobile apparatus in step 606 using equations (1) and (2) above from the arrival times of the range request and range response recorded in step 508 of FIG. 5, the signal propagation times $t_{AB}$ and $t_{AM}$, and the processing delay $t_d$. It may be appreciated that because of the close relationship between time-of-flight and distance, any or all of the signal propagation times $t_{AM}$, $t_{AM}$, and $t_{BM}$ can be equivalently expressed in terms of distance rather than in terms of time or vice versa, with appropriate modifications made to the computations as needed.

Returning to FIG. 5, the apparatus may use the distance to the mobile apparatus to compute its location in step 512. In one configuration of an inferring apparatus, two, three, four, or more fixed-site apparatuses communicate their coordinates and their distance to the apparatus, and the apparatus uses this information to determine a location of the mobile apparatus. In another configuration, the apparatus participates in the process of locating the mobile apparatus through a computation distributed across one or more fixed-site apparatuses. In another configuration, the apparatus communicates the distance to the mobile apparatus determined in step 510 to one or more of the fixed-site apparatuses, or to a remote entity other than a fixed-site apparatus to determine the location of the second apparatus. In another configuration, the remote fixed-site apparatus may communicate with one or more inferring apparatuses to convey an anticipated time or time window for sending the range request and for detecting the range response, so that the inferring apparatuses can make resources available for the detection and potentially avoid unnecessary repeating of the range request and range response processes. In another configuration, the mobile node may be configured to immediately respond to an incoming range request so that the processing delay $t_d$ is short to improve accuracy of the distance determination. In another configuration, the mobile apparatus is configured to respond to an incoming range request after a fixed, pre-determined processing delay $t_d$. In another configuration, the mobile apparatus wakes up and transmits a message that it wishes to be located; this message is then detected by a fixed-site apparatus that in turn issues a ranging request and receives a range response as described above with respect to FIG. 3B. In another configuration, the range request is originated from the mobile apparatus and the range response is received from a remote fixed-site apparatus, the range request and the range response being detected at the inferring apparatus.

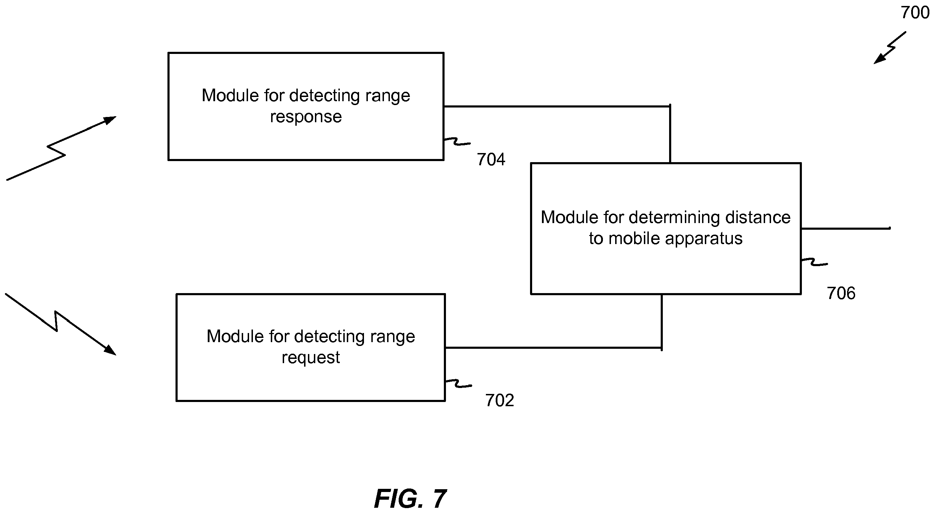

FIG. 7 is a conceptual data flow diagram illustrating an example of data flow between different modules in an apparatus. The apparatus 700 may be used to determine a distance from the apparatus to a mobile apparatus. The apparatus 700 includes a module 702 for detecting a range request transmitted from a remote fixed-site apparatus to the mobile apparatus, a module 704 for detecting a range response transmitted from the mobile apparatus to the fixed-site apparatus in response to the range request, and a module 706 for determining the distance to the mobile apparatus based on the detected range request and range response at the apparatus.

The apparatus 700 may include additional modules that perform each of the steps of the algorithm presented above in connection with FIGS. 5 and 6. As such, each step may be performed by a module and the apparatus may include one or more of those modules. The modules may be one or more hardware components specifically configured to carry out the stated processes and/or algorithms, a set of instructions implemented by a processor configured to perform the stated processes and/or algorithm, computer code stored within a computer-readable medium for implementation by a processor, or some combination thereof.

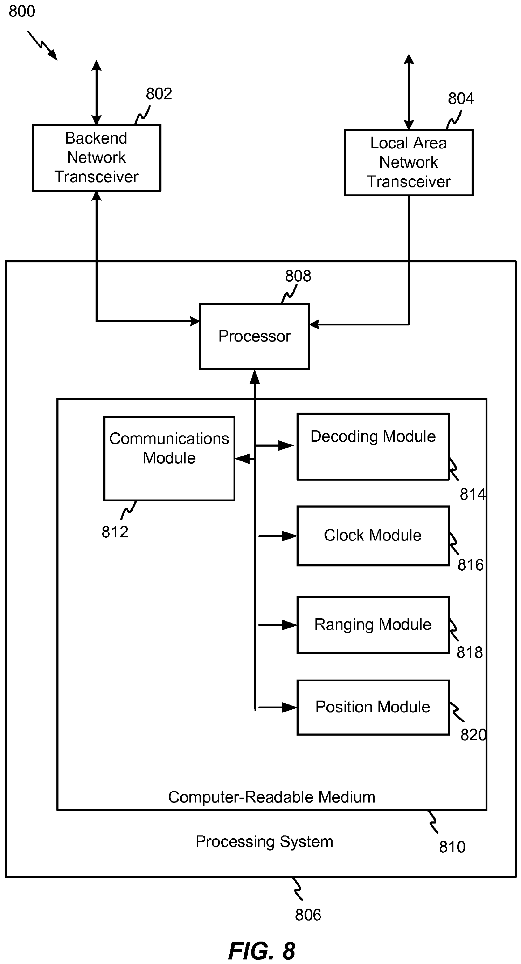

A more detailed description of an apparatus capable of performing inferred time-of-flight ranging will now be presented with reference to FIG. 8. FIG. 8 is a block diagram illustrating several components that comprise one configuration of an apparatus 800 capable of inferred time-of-flight ranging. For the sake of simplicity, the several components illustrated in the block diagram of FIG. 8 are connected together using a common bus, which is meant to represent that these components are operatively coupled together. Those skilled in the art will recognize that other components may be provided and adapted as necessary to operatively couple and configure an actual apparatus. Further, it is also recognized that one or more components illustrated in FIG. 8 may be further subdivided or two or more components illustrated in FIG. 8 may be combined.

The apparatus 800 may be any entity that can detect range requests and range responses between two remote apparatuses, perform timing measurements and calculations, and interface to a backend network. By way of example, the apparatus 800 may be a LAN-WAP having firmware, software, and/or hardware for performing the described functions. Alternatively, the apparatus 800 may be a wireless controller in a building automation system or some fixed-site apparatus in any other suitable system. In other configurations, the apparatus 800 may be a special purpose device dedicated to performing ranging operations.

In configurations where the apparatus 800 is designed to interface to a backend network, the apparatus 800 may include one or more backend network transceivers, represented by backend network transceiver 802. The backend network transceiver 802 may be a wireless area network (WAN) transceiver when the apparatus is serving as an access point for mobile apparatuses to a WWAN. In this example, the backend network transceiver 802 may include suitable devices, hardware, and software for communicating with and detecting signals to and from WAN-WAPs 104 (see FIG. 1), and directly with other wireless devices within a network. In one configuration, the backend network transceiver 802 may include a CDMA communication system suitable for communicating with a CDMA network of wireless base stations. In other configurations, the wireless communication system may include a different type of cellular telephony technology, such as, for example, a TDMA network, a GSM network, or the like. Additionally, any other type of wireless networking technologies may be used, for example, WiMAX in accordance with the IEEE 802.16 standard, or the like.

Alternatively, the backend network transceiver 802 may provide a bus interface in a building automation system. In this example, the backend network transceiver 802 may include suitable devices, hardware, and software for communicating with and detecting signals to and from a system controller 210 (see FIG. 2) in the building automation system 200, and directly with other devices on the secondary bus 204 (see FIG. 2). In one configuration, the backend network transceiver 802 is designed to support a proprietary protocol suitable for communicating over the bus. In other configurations, the backend network transceiver 802 may support Ethernet or other suitable protocol.

The apparatus 800 may also include one or more local area network (LAN) transceivers, represented by LAN transceiver 804. The LAN transceiver 804 may include suitable devices, hardware, and software for communicating with and detecting signals to and from LAN-WAPs 106 (see FIG. 1), or directly with other wireless devices within a network. In one configuration, the LAN transceiver 804 may include a Wi-Fi communication system, for example in accordance with the IEEE 802.11x standard, suitable for communicating with one or more mobile apparatuses. In other configurations, the LAN transceiver 804 may include another type of local area network technology, a personal area network technology such as a Bluetooth network, or the like. Additionally, any other type of wireless networking technologies may be used, for example, Ultra Wide Band (UWB), ZigBee, wireless USB, or the like.

A processing system 806 may be coupled to the backend network transceiver 802 and the LAN transceiver 804. The processing system 806 may include one or more microprocessors, microcontrollers, and digital signal processors, represented generally by processor 808. The processor 808 provides processing functions, as well as other calculation and control functionality. The processing system 806 may include computer readable media 810 for storing data and software instructions for executing programmed functionality within the apparatus 800. The computer-readable media 810 may be internal to or on-board the processor 808, such as within the same IC package, or the computer-readable media 810 may be memory that is external to the processor 810 and functionally coupled over a bus or the like, or a combination of internal and external memory.

A number of modules are shown residing in the computer-readable media 810 for use by the processor 808 to manage both communications and ranging operations. Each module may be a software module running in the processor 808, a software module resident or stored in the computer-readable media 810, a hardware module coupled to the processor 808, or any combination thereof. As illustrated in FIG. 8, the computer-readable media 810 may include or otherwise receive a communications module 812, a decoding module 814, a clock module 816, a ranging module 818, and a position module 820. It should be appreciated that the organization of the computer-readable media 810 as shown in FIG. 8 merely serves as an example, and as such the functionality of the modules may be combined, separated, and be structured in different ways depending upon the implementation of the apparatus 800.

The communications module 812 supports various communication functions in the apparatus 800. By way of example, the communications module 812 may provide the various communications protocols running on top of the physical layer protocols implemented by the backend network and LAN transceivers, such as, for example, media access control (MAC) and network layers in the case of an apparatus serving as an access point for mobile apparatuses to a WWAN. The communications module 812 may also provide various applications running above the supporting protocol layers. These applications may support the functionality of the apparatus 800. By way of example, one or more applications provided by the communications module 812 may provide security that enables only authorized mobile apparatuses to connect to the WWAN through the apparatus 800. Those skilled in the art will be readily capable of designing a communications module 812 that is best suited for any particular application.

The decoding module 814, the clock module 816, and the ranging module 818 support inferred time-of-flight ranging. The decoding module 814 may provide a means for detecting a range request transmitted from a remote fixed-site apparatus to a mobile apparatus, and a means for detecting a range response transmitted from the mobile apparatus to the remote fixed-site apparatus. In one configuration of an apparatus 800, the decoding module 814 is configured to detect data packets containing the request and response. The decoding module 814 may provide various physical layer decoding functions, error protection protocols, and other relevant processing required by the wireless standard being employed. The decoding module 814 may also provide a means for determining whether the range response was transmitted in response to the range request using, by way of example, an electronic tag or electronic identification number in the data field of each packet, or by some other suitable means.

The clock module 816 may be used to record the arrival times at apparatus 800 of the range request and the range response exchanged between the remote fixed-site apparatus and the mobile apparatus. By way of example, the decoder module 814 may enable a counter provided by the clock module 816 when it successfully decodes a range request from the remote fixed-site apparatus. The decoding module 814 then continues to search for a response, and when it successfully decodes a response from the mobile apparatus, it disables the counter. The value of the counter, which equals the time difference between the arrival times of the range request and range response ($t_4 - t_1$), may then be recorded.

The decoding module 814 may also provide a means for receiving, from the remote fixed-site apparatus, information representing the transmission time between the remote fixed-site and the mobile apparatus. By way of example, the decoding module 814 may search for data packets from the remote fixed-site apparatus. These data packets may contain the measured signal propagation time between the remote fixed-site apparatus and the mobile apparatus ($t_{AM}$). These data packets may be decoded in the same manner as described above, with the measured signal propagation time being recovered from the data packets and recorded.

The ranging module 818 may provide a means for determining a distance between the apparatus 800 and the mobile apparatus. The ranging module 818 may retrieve the signal propagation time ($t_{AM}$) from decoding module 814, and the time difference between the arrival times at apparatus 800 of the range request and range response ($t_4 - t_1$) from the clock module 816, and compute the distance from apparatus 800 to the mobile apparatus using the equations (1) and (2) above. The signal propagation time between the remote fixed-site apparatus and the apparatus ($t_{AB}$), and the processing delay ($t_d$) of the mobile apparatus may be constants and may be stored by the apparatus 800 before the ranging operation and accessed by the ranging module 818 to complete the computation. The distance ($d_{BM}$) computed by the ranging module 818 may then be communicated to a remote entity or otherwise retained by the apparatus 800 to determine the location of the mobile apparatus.

The apparatus 800 may also include a position module 820. In one configuration of the apparatus 800, the position module 820 may provide a means for determining a location of the mobile apparatus from the distance ($d_{BM}$) computed by the ranging module 818 and information from one or more remote fixed-site apparatuses. The information may include for each remote fixed-site apparatus the coordinates of that remote apparatus and the distance from that remote apparatus to the mobile apparatus. Alternatively, the position module 820 may serve as part of a distributed system that assists in the determination of the location of the mobile apparatus.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, a plurality of DSP cores, one or more microprocessors in conjunction with one or more DSP cores, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in software, the functions may be stored as one or more instructions on a computer-readable medium. A computer-readable medium may be any medium that can be accessed by a computer. In some embodiments, the computer-readable medium may be non-transitory in that it may store instructions for hours, days, weeks, months, years, or longer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material in addition to the computer readable medium.

Further, it should be appreciated that modules and/or other appropriate means for performing the methods and techniques described herein can be downloaded and/or otherwise obtained by an access terminal and/or access point as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that an access terminal and/or access point can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes, and variations may be made in the arrangement, operation and details of the methods and apparatus described above without departing from the scope of the claims.

The previous description is provided to enable any person skilled in the art to fully understand the full scope of the disclosure. Modifications to the various configurations disclosed herein will be readily apparent to those skilled in the art. Thus, the claims are not intended to be limited to the various aspects of the disclosure described herein, but is to be accorded the full scope consistent with the language of claims, wherein reference to an element in the singular is not intended to mean "one and only one" unless specifically so stated, but rather "one or more." Unless specifically stated otherwise, the term "some" refers to one or more. A claim that recites at least one of a combination of elements (e.g., "at least one of A, B, or C") refers to one or more of the recited elements (e.g., A, or B, or C, or any combination thereof). All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

**Claims**

1. A method by an apparatus for distance determination, comprising:

   detecting (502) at the apparatus a range request transmitted between a second apparatus and a third apparatus, wherein the third apparatus is geographically fixed, and wherein the second apparatus is movable;
   detecting (504) at the apparatus a range response transmitted between the second apparatus and the third apparatus;
   determining (506) whether the detected range response was transmitted in response to the detected range request; and
   if the detected range response was transmitted in response to the detected range request, determining (510) by the apparatus a distance between the apparatus and the second apparatus based on a time of arrival of the detected range request and a time of arrival of the detected range response and based on a known distance between the third apparatus and the apparatus and based on a transmission time between the second apparatus and the third apparatus, wherein information representing the transmission time between the second apparatus and the third apparatus is received from the third apparatus.

2. The method of claim 1 wherein the distance is determined based on a difference between arrival times of the detected range request and the detected range response at the apparatus.

3. The method of claim 1 wherein the distance is determined based on a processing delay of the one of the second and third apparatuses receiving the range request, wherein the processing delay comprises a delay for transmitting the range response in response to the range request.

4. The method of claim 1 wherein the distance is determined based on a signal propagation time between the third apparatus and the apparatus.

5. The method of claim 1 further comprising determining (512) a location of the second apparatus based on the determined distance.

6. The method of claim 1 wherein the distance is determined without communicating directly with the second apparatus.

7. The method of claim 1 wherein the range request is addressed to the one of the second and third apparatuses receiving the range request and not addressed to the apparatus.

8. The method of claim 1 wherein the distance is determined based on locations of the third apparatus and the apparatus.

9. The method of claim 1 wherein the range request is transmitted from the third apparatus to the second apparatus, and the range response is transmitted from the second apparatus to the third apparatus.

10. An apparatus (700) for distance determination, comprising:

   means (702) for detecting at an apparatus a range request transmitted between a second apparatus and a third apparatus, wherein the third apparatus is geographically fixed, and wherein the second apparatus is movable;
   means (704) for detecting at the apparatus a range response transmitted between the second apparatus and the third apparatus;
   means for determining whether the detected range response was transmitted in response to the detected range request; and
   means (706) for determining a distance between the apparatus and the second apparatus based on a time of arrival of the detected range request and a time of arrival of the detected range response and based on a known distance between the third apparatus and the apparatus and based on a transmission time between the second apparatus and the third apparatus, wherein information representing the transmission time between the second apparatus and the third apparatus is received from the third apparatus, if the detected range response was transmitted in response to the detected range request.

11. A computer-program product for distance determination, comprising:

   computer-readable medium comprising code executable to perform a method according to any of claims 1 to 9.

**Patentansprüche**

1. Ein Verfahren durch eine Vorrichtung zur Distanzbestimmung, das Folgendes aufweist:

   Detektieren (502), an der Vorrichtung, einer Entfernungsanfrage, die zwischen einer zweiten Vorrichtung und einer dritten Vorrichtung gesendet wird, wobei die dritte Vorrichtung geographisch festgelegt ist und wobei die zweite Vorrichtung bewegbar ist;
   Detektieren (504), an der Vorrichtung, einer Entfernungsantwort, die zwischen der zweiten Vorrichtung der dritten Vorrichtung gesendet wird;
   Bestimmen (506), ob die detektierte Entfernungsantwort ansprechend auf die detektierte Entfernungsanfrage gesendet wurde; und
   wenn die detektierte Entfernungsantwort ansprechend auf die detektierte Entfernungsanfrage gesendet wurde, Bestimmen (510), durch die Vorrichtung, einer Distanz zwischen der Vorrichtung und der zweiten Vorrichtung basierend auf einer Ankunftszeit der detektierten Entfernungsanfrage und einer Ankunftszeit der detektierten Entfernungsantwort und basierend auf einer bekannten Distanz zwischen der dritten Vorrichtung und der Vorrichtung und basierend auf einer Sendezeit zwischen der zweiten Vorrichtung und der dritten Vorrichtung, wobei Information, die die Sendezeit zwischen der zweiten Vorrichtung und der dritten Vorrichtung darstellt, von der dritten Vorrichtung empfangen wird.

2. Verfahren nach Anspruch 1, wobei die Distanz basierend auf einer Differenz zwischen den Ankunftszeiten der detektierten Entfernungsanfrage und der detektierten Entfernungsantwort an der Vorrichtung bestimmt wird.

3. Verfahren nach Anspruch 1, wobei die Distanz basierend auf einer Verarbeitungsverzögerung der einen von der zweiten und dritten Vorrichtung, die die Entfernungsanfrage empfängt, bestimmt wird, wobei die Verarbeitungsverzögerung eine Verzögerung zum Senden der Entfernungsantwort ansprechend auf die Entfernungsanfrage aufweist.

4. Verfahren nach Anspruch 1, wobei die Distanz basierend auf einer Signalausbreitungszeit zwischen der dritten Vorrichtung und der Vorrichtung bestimmt wird.

5. Verfahren nach Anspruch 1, das weiter Bestimmen (512) eines Standortes der zweiten Vorrichtung basierend auf der bestimmten Distanz aufweist.

6. Verfahren nach Anspruch 1, wobei die Distanz bestimmt wird ohne direkt mit der zweiten Vorrichtung zu kommunizieren.

**7.** Verfahren nach Anspruch 1, wobei die Entfernungsanfrage an die eine von der zweiten und dritten Vorrichtung, die die Entfernungsanfrage empfängt, adressiert ist und nicht an die Vorrichtung adressiert ist.

**8.** Verfahren nach Anspruch 1, wobei die Distanz basierend auf Standorten der dritten Vorrichtung und der Vorrichtung bestimmt wird.

**9.** Verfahren nach Anspruch 1, wobei die Entfernungsanfrage von der dritten Vorrichtung an die zweite Vorrichtung gesendet wird und die Entfernungsantwort von der zweiten Vorrichtung an die dritte Vorrichtung gesendet wird.

**10.** Eine Vorrichtung (700) zur Distanzbestimmung, die Folgendes aufweist:

Mittel (702) zum Detektieren, an der Vorrichtung, einer Entfernungsanfrage, die zwischen einer zweiten Vorrichtung und einer dritten Vorrichtung gesendet wird, wobei die dritte Vorrichtung geographisch festgelegt ist und wobei die zweite Vorrichtung bewegbar ist;
Mittel (704) zum Detektieren, an der Vorrichtung, einer Entfernungsantwort, die zwischen der zweiten Vorrichtung der dritten Vorrichtung gesendet wird;
Mittel zum Bestimmen, ob die detektierte Entfernungsantwort ansprechend auf die detektierte Entfernungsanfrage gesendet wurde; und
Mittel (706) zum Bestimmen einer Distanz zwischen der Vorrichtung und der zweiten Vorrichtung basierend auf einer Ankunftszeit der detektierten Entfernungsanfrage und einer Ankunftszeit der detektierten Entfernungsantwort und basierend auf einer bekannten Distanz zwischen der dritten Vorrichtung und der Vorrichtung und basierend auf einer Sendezeit zwischen der zweiten Vorrichtung und der dritten Vorrichtung, wobei Information, die die Sendezeit zwischen der zweiten Vorrichtung und der dritten Vorrichtung darstellt, von der dritten Vorrichtung empfangen wird, wenn die detektierte Entfernungsantwort ansprechend auf die detektierte Entfernungsanfrage gesendet wurde.

**11.** Ein Computerprogrammprodukt zur Distanzbestimmung, das Folgendes aufweist:

ein computerlesbares Medium, das Code aufweist, der ausgeführt werden kann zum Durchführen eines Verfahrens gemäß einem der Ansprüche 1 bis 9.

**Revendications**

**1.** Un procédé mis en oeuvre par un appareil pour la détermination de distance, comprenant les étapes consistant à :

détecter (502) au niveau de l'appareil une demande de portée transmise entre un deuxième appareil et un troisième appareil, dans lequel le troisième appareil est fixe géographiquement, et dans lequel le deuxième appareil est susceptible de se déplacer ;
détecter (504) au niveau de l'appareil une réponse de portée transmise entre le deuxième appareil et le troisième appareil ;
déterminer (506) si la réponse de portée détectée a été transmise en réponse à la demande de portée détectée ; et
si la réponse de portée détectée a été transmise en réponse à la demande de portée détectée, l'étape consistant à déterminer (510) par l'appareil, une distance entre l'appareil et le deuxième appareil sur la base d'un temps d'arrivée de la demande de portée détectée ainsi que un temps d'arrivée de la réponse de portée détectée, et sur la base d'une distance connue entre le troisième appareil et l'appareil, et sur la base d'un temps de transmission entre le deuxième appareil et le troisième appareil, dans lequel l'information représentant le temps de transmission entre le deuxième appareil et le troisième appareil est reçue à partir du troisième appareil.

**2.** Le procédé selon la revendication 1, dans lequel la distance est déterminée en fonction d'une différence entre les temps d'arrivée de la demande de portée détectée et la réponse de portée détectée au niveau de l'appareil.

**3.** Le procédé selon la revendication 1, dans lequel la distance est déterminée en fonction d'un retard de traitement de l'un parmi les deuxième et troisième appareils recevant la demande de portée, dans lequel le retard de traitement comprend un retard de transmission de la réponse de portée en réponse à la demande de portée.

**4.** Le procédé selon la revendication 1, dans lequel la distance est déterminée en fonction d'un temps de propagation du signal entre le troisième appareil et l'appareil.

5. Le procédé selon la revendication 1, comprenant en outre l'étape consistant à déterminer (512) un emplacement du deuxième appareil en fonction de la distance déterminée.

6. Le procédé selon la revendication 1, dans lequel la distance est déterminée en l'absence de communication directe avec le deuxième appareil.

7. Le procédé selon la revendication 1, dans lequel la demande de portée est adressée à l'un parmi les deuxième et troisième appareils recevant la demande de portée et n'est pas adressée à l'appareil.

8. Le procédé selon la revendication 1, dans lequel la distance est déterminée en fonction des emplacements du troisième appareil et de l'appareil.

9. Le procédé selon la revendication 1, dans lequel la demande de portée est transmise du troisième appareil au deuxième appareil, et la réponse de portée est transmise du deuxième appareil au troisième appareil.

10. Un appareil (700) pour la détermination de distance, comprenant :

des moyens (702) pour détecter au niveau d'un appareil une demande de portée transmise entre un deuxième appareil et un troisième appareil, dans lequel le troisième appareil est fixe géographiquement, et dans lequel le deuxième appareil est susceptible de se déplacer ;
des moyens (704) pour détecter au niveau de l'appareil une réponse de portée transmise entre le deuxième appareil et le troisième appareil ;
des moyens pour déterminer si la réponse de portée détectée a été transmise en réponse à la demande de portée détectée ; et
des moyens (706) pour déterminer une distance entre l'appareil et le deuxième appareil sur la base d'un temps d'arrivée de la demande de portée détectée ainsi que un temps d'arrivée de la réponse de portée détectée, et sur la base d'une distance connue entre le troisième appareil et l'appareil, et sur la base d'un temps de transmission entre le deuxième appareil et le troisième appareil, dans lequel l'information représentant le temps de transmission entre le deuxième appareil et le troisième appareil est reçue à partir du troisième appareil, si la réponse de portée détectée a été transmise en réponse à la demande de portée détectée.

11. Un produit formant programme informatique pour la détermination de distance, comprenant :

un support lisible par ordinateur comportant du code exécutable pour mettre en oeuvre un procédé selon l'une quelconque des revendications 1 à 9.

*FIG. 1*

**FIG. 2**

Remote Fixed
Apparatus A

Inferring Apparatus B

$t_{AB}$

$t_{AM}$

$t_{BM}$

Mobile
Apparatus M

*FIG. 3A*

FIG. 3B

$d_{AM}$

Mobile
Apparatus M
(ghost)

$d_{BM}$

Fixed
Apparatus A

Inferring
Apparatus B

$d_{BM}$

$d_{AM}$

Mobile
Apparatus M

*FIG. 4A*

Mobile
Apparatus M
(no ghost)

$d_{AM}$

$d_{BM}$

$d_{CM}$

Fixed  Apparatus
A

InferringApparatus
B

Fixed  Apparatus
C

$d_{BM}$

$d_{AM}$

$d_{CM}$

Mobile
Apparatus M

**FIG. 4B**

502 — Detect a range request from remote fixed apparatus

504 — Detect a range response from mobile apparatus

506 — Confirm same ranging operation

NO

YES

508 — Record arrival times of the range request and the range response

510 — Determine distance to mobile apparatus

512 — Determine location of mobile apparatus

*FIG. 5*

602 — Recover signal propagation time $t_{AM}$ from data packet

604 — Retrieve from memory signal propagation time $t_{AB}$ and processing delay $t_d$

606 — Determine distance to mobile apparatus using arrival times of range request and range response

**FIG. 6**

EP 2 812 721 B1

700

Module for detecting range
response

704

Module for determining distance
to mobile apparatus

706

Module for detecting range
request

702

**FIG. 7**

*FIG. 8*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6101391 A